# EUROPEAN PATENT SPECIFICATION

(11) **EP 2 641 034 B1**
(45) Date of publication and mention of the grant of the patent: **15.07.2015**
(21) Application number: 11799477.2
(22) Date of filing: 14.11.2011
(51) Int. Cl.: F24J 3/08

(54) **CLOSED-LOOP GEOTHERMAL PROBE**
ERDWÄRMESONDE MIT GESCHLOSSENEM KREISLAUFSYSTEM
SONDE GÉOTHERMIQUE À CIRCUIT FERMÉ

(30) Priority: 18.11.2010 IT MO20100333
(43) Date of publication of application: 25.09.2013
(73) Proprietor: Previato, Paolo, 45100 Rovigo (IT); Zambon, Federico, 45100 Rovigo (IT); Bellelli, Alessandra, 41012 Carpi (MO) (IT); Bellinello, Diego, 45030 San Martino di Venezze (IT)
(72) Inventor: BELLINELLO, Diego, 45030 San Martino di Venezze (RO) (IT)
(74) Representative: Luppi, Emanuele
(86) International application number: PCT/IB2011/002681
(87) International publication number: WO 2012/066403

(56) References cited:
- WO-A1-2009/043548
- US-A- 3 938 592

## Description

### Technical Field

The present invention relates to a closed-loop geothermal probe.

### Background Art

It is known that geothermal energy consists in a form of energy produced by means of heat geological sources and is based on the natural heat of the earth (geothermics).

Such energy can be exploited for example to produce thermal energy for domestic hot water and for heating buildings in winter or cooling them in summer, exploiting the sub-soil as a heat reservoir.

This operation is made possible by means of heat pumps suitable for exploiting the fact that soil has a temperature which remains substantially constant throughout the year (normally, already at just a few metres of depth, the soil has a temperature of around 10-15 °C) and using the difference in heat between the soil and the atmosphere to absorb the heat of the soil and make it available for human uses or vice versa.

To transfer the heat from/to the soil, so-called "geothermal probes" are used, which can be of two types depending on their type of operation: open loop or closed loop.

The open-loop geothermal probes are used on soils where there are water-bearing stratums and these consist of underground pipes (wells) which take water directly from a water-bearing stratum or from another suitable water body.

The stratum water is conveyed to the heat pump, exchanging heat with it, and is then returned to the source, in a well separate from the previous one.

The closed-loop geothermal probes on the other hand are installed quite apart from whether there are water-bearing stratums or not in the ground and usually consist of U-shaped pipes composed of materials with high heat transmittance and through which flows an operating fluid distinct from the stratum water, with which the operating fluid never mixes.

The operating fluid flowing through the underground pipes exchanges heat with the soil, conveying it to the surface or into the sub-soil.

Furthermore, the geothermal probes can be of the vertical or horizontal type.

In the first case, the probe penetrates the ground even by approx. 130 or 150 m, encountering higher temperatures and requiring particular machinery for core sampling the soil.

In the second case, on the other hand, the pipes mainly extend horizontally and are buried without reaching very great depths.

These probes of traditional type have a number of drawbacks.

The open-loop geothermal probes do in fact increase the risk of contaminating the water-bearing stratums and this strongly restricts their use and diffusion.

With reference to the closed-loop geothermal probes on the other hand, it must be underlined that the operating fluid used in such systems usually consists of water mixed with an antifreeze solution such as ethylene or propylene glycol, which involves big problems as regards environment disposal and safety for human beings, as well as problems tied to the possible contamination of the water-bearing stratums in case of pipe breakage.

All traditional geothermal probes are affected by rather high manufacturing and installation costs, above all in the event of having to reach particularly deep burying depths.

In this respect, it must be underlined that the quantity and complexity of the burying excavations depends on the system heat exchange capacity to be obtained and in many cases several wells have to be made and several probes installed to correctly size the system from a thermal viewpoint.

It should not be forgotten furthermore that all the traditional geothermal probes are designed to be buried and cemented stably in the ground, without any chance of doing maintenance or rebuilding jobs without demolishing the pre-existing probe, with consequent problems tied to the disposal of associated wastes/rubble.

In this respect, it is underlined that traditional probes have a rather limited average working life (about 10 years).

Some particular types of geothermal probes are shown on the patent documents WO 2009/043548 and US 3,938,592. Document WO2009/043548 discloses the preamble of claim 1.

### Description of the Invention

The main object of the present invention is to provide a closed-loop geothermal probe which allows finding a valid alternative to the use of traditional probes, permitting, productive thermal capacity being equal, the reduction of the quantity and depth of excavations, with consequent curbing of system purchase and installation costs, and, cost being equal, the increase of the efficiency and productivity of the system.

A further object of the present invention is to provide a closed-loop geothermal probe that permits avoiding all risk of environment contamination and safety for human beings and, at the same time, is able to operate for a period considerably longer than traditional probes.

Another object of the present invention is to provide a closed-loop geothermal probe that allows overcoming the mentioned drawbacks of the state of the art in the ambit of a simple, rational, easy and effective to use as well as low cost solution.

The above mentioned objects are achieved by the present closed-loop geothermal probe, comprising at least a tubular element which can be buried in a water-bearing stratum containing stratum water, inside said tubular element being delimited a housing space for housing at least a heat exchanger in which flows an operating fluid suitable for exchanging heat with said stratum water, said tubular element comprising at least a first access opening and at least a second access opening for the flow of said stratum water between said water-bearing stratum and said tubular element, inside said tubular element being housed at least a pumping device for pumping said stratum water suitable for returning said stratum water in inlet from one of said access openings and for pumping it in exit through the other of said access openings, at least one between said first access opening and said second access opening being associated with filtering means, characterized by the fact that it comprises at least a utility pipe suitable for cleaning said filtering means.

### Brief Description of the Drawings

Other characteristics and advantages of the present invention will become more evident from the description of a preferred, but not sole, embodiment of a closed-loop geothermal probe, illustrated purely as an example but not limited to the annexed drawings in which:

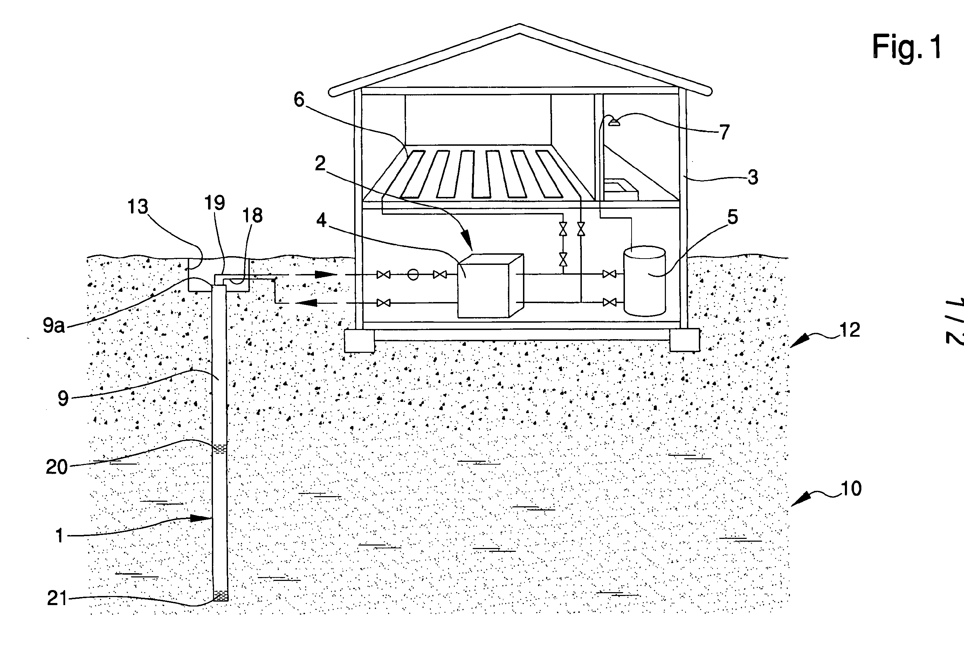

figure 1 is a perspective view of a home system which uses the geothermal probe according to the invention;
figure 2 is a section, schematic and partial view of the geothermal probe according to the invention.

### Embodiments of the Invention

With particular reference to such illustrations, globally indicated by 1 is a closed-loop geothermal probe.

In the particular embodiment of the invention shown in the illustrations, the geothermal probe 1 is connected to a home conditioning system 2 of a building 3 having:
- a conditioning machine 4, of the type of a heat pump or the like, which heats or cools the water for home uses,
- a storage tank 5 for the heated water, and
- a series of units 6, 7, both for home heating 6 (radiators or floor coils) and for the supply of domestic hot water 7 (showers, washbasins or the like).

For the correct operation of the system 2, the heat pump 4 is also designed to cooperate with an operating fluid 8 which circulates in the geothermal probe 1 and transfers the heat from the heat pump 4 to the sub-soil or, vice versa, from the sub-soil to the heat pump 4.

Usefully, the operating fluid 8 used in the heat pump 4 and in the geothermal probe 1 is drinking water supplied by the normal water mains, without any type of additive; in this respect it must be underlined that the particular type of geothermal probe 1 according to the present invention is able to correctly operate without requiring anti-freeze substances.

The geothermal probe 1 comprises a tubular element 9 which can be buried in a water-bearing stratum 10 containing stratum water 11.

For this purpose, the tubular element 9 is of not very great length but enough to reach the first available water-bearing stratum 10 at low depth.

Depending on the geological conformation of the burying site therefore, the tubular element 9 may have different shapes and sizes. By way of example, in any case, a possible embodiment of the geothermal probe 1 comprises a tubular element 9 with a diameter of about 20-30 cm and a length of about 30 m, which is intended to be buried at a depth of about 15-20 m in the ground 12, until the water-bearing stratum 10 is reached, inside which it extends for a further depth of about 10-15 m.

The geothermal probe 1 comprises a utility well 13 mounted firmly at the ground and partially buried in the ground 12, from which an upper extremity 9a of the tubular element 9 appears on surface.

The upper extremity 9a is substantially open and, through it, it is possible to access the internal part of the geothermal probe 1 to perform maintenance and repair jobs.

The upper extremity 9a is re-closable through specific closing means 14, of the type of a water-tight partition wall.

Inside the tubular element 9 is delimited a housing space 15, 16 designed to house a heat exchanger 17 in which flows the operating fluid 8 suitable for exchanging heat with stratum water 11.

The heat exchanger 17 consists of a tube nest of any shape and geometry, and is associated with an incoming duct 18 of the operating fluid 8 to be heated/cooled and with a delivery duct 19 of the heated/cooled operating fluid 8.

The incoming and delivery ducts 18, 19 are housed at least partially inside the tubular element 9, along which they run almost completely and come out through the upper extremity 9a before being associated with the heat pump 4.

To allow the heat exchange between the operating fluid 8 and the stratum water 11, the tubular element 9 has a first access opening 20 and a second access opening 21 for the flow of the stratum water 11 between the water-bearing stratum 10 and the housing space 15, 16 of the tubular element 9.

The first access opening 20 and the second access opening 21 are associated with filtering means.

Usefully, the access openings 20, 21 coincide with the filtering means and are composed of a series of slots of a diameter adequate for not allowing the passage of sand particles or other solid particulates present in the water-bearing stratum 10.

Alternative embodiments cannot however be ruled out wherein the access openings 20, 21 are larger and associated with separate filtering means, such as net meshes, grates, grilles or the like.

Inside the tubular element 9, a pumping device 22 is housed for pumping the stratum water 11 which is suitable for recalling the stratum water 11 incoming from one of the access openings 20, 21 and pumping it out through the other access opening 20, 21.

Inside the tubular element 9, a forced flow of stratum water 11 is therefore produced which moves from one access opening 20, 21 to another, assailing the heat exchanger 17 and exchanging heat with the operating fluid 8 inside it.

The access openings 20, 21 are substantially spaced out along the longitudinal direction of the tubular element 9, the housing space 15, 16 being defined by the space comprised between the two access openings 20, 21.

The housing space 15, 16 is split into a first compartment 15 communicating with the first access opening 20 and into a second compartment 16 communicating with the second access opening 21, the compartments 15, 16 being separated the one from the other and placed in fluidic communication by the interposition of the pumping device 22.

For this purpose, the tubular element 9 is internally provided with a shoulder 23 which separates the two compartments 15, 16 and supports sealing means 24 on which the pumping device 22 rests.

The sealing means 24 consist of an anti-flooding grommet which prevents the flow of the stratum water 11 in a direction contrary to that determined by the pumping device 22.

The heat exchanger 17 and the pumping device 22 are housed in the first compartment 15, above the shoulder 23 and the anti-flooding grommet 24.

Usefully the tubular element 9 is designed to be buried in a substantially vertical position, and so the access openings 20, 21 end up being positioned one above the other, with the first access opening 20 substantially above and the second access opening 21 substantially below; for this reason, in this treatise, the first access opening 20 may also be called top opening, while the second access opening 21 may also be called bottom opening.

Alternative embodiments cannot however be ruled out wherein the tubular element 9 can be placed obliquely or horizontally.

For the correct operation of the geothermal probe 1, at least one utility pipe 25 is provided suitable for cleaning the filtering means of the bottom opening 21 which, due to its shape and position, is more likely to be dirtied.

Preferably, the geothermal probe 1 has two utility pipes 25, able to operate alternately according to need including in case of the malfunction of one of them.

The utility pipes 25, in point of fact, allow removing any solid particles that might accumulate on the bottom of the geothermal probe 1 without removing the various components from the tubular element 9.

Advantageously, the geothermal probe 1 also comprises a processing and control unit 26 which manages the operation of the pumping device 22 according to the required heat exchange, and also monitors the correct operation of the entire system, indicating the nature of any problems, stopping operation in case of critical speed, providing the readings of the parameters inside the system and, if necessary, storing the acquired historical data in a storage memory, if provided.

In this respect, the geothermal probe 1 has:
- first detection means 27, of the type of a pressure switch or the like, which are suitable for detecting the pressure of stratum water 11 exiting from the pumping device 22 and are operatively associated with the processing and control unit 26;
- second detection means 28, which are suitable for detecting the temperature of the stratum water 11 exiting from the heat exchanger 17 and are associated with the processing and control unit 26; and
- third detection means 29, which are suitable for detecting the temperature of the operating fluid 8 exiting from the tubular element 9 and are operatively associated with the processing and control unit 26.

The pressure switch 27, in point of fact, is suitable for monitoring the counter pressure of the stratum water 11 for the purpose of determining any blockage of the bottom opening 21 and any faults affecting the pumping device 22, as in the case of no pressure even though the pumping device 22 has been switched on. By means of the second detection means 28 and of the third detection means 29, furthermore, the processing and control unit 26 is able to compare the temperature of the stratum water 11 and of the operating fluid 8 once heat exchange has occurred and determine any inefficiencies of the heat exchanger 17 which could require maintenance jobs to be performed.

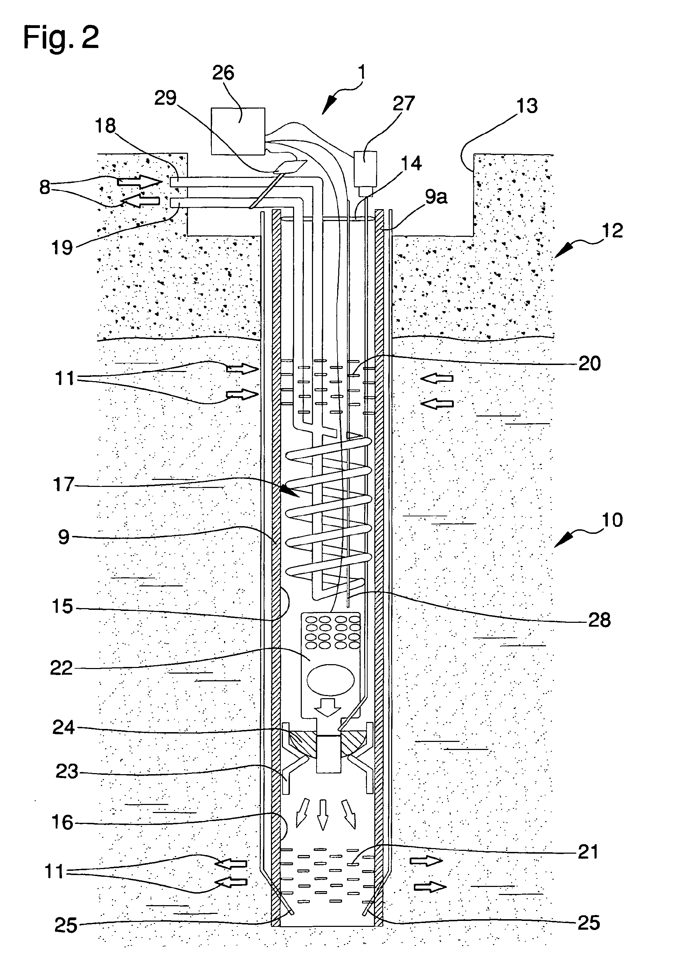

Figure 2 schematically shows the operation of the geothermal probe 1 in winter, i.e., when the heat pump 4 is run to heat the water circulating in the units 6, 7. In such circumstances, the operating fluid 8 is required to take heat from the water-bearing stratum 10 and transfer it to the heat pump 4.

The operating fluid 8 entering the tubular element 9 through the incoming duct 18 and exiting through the delivery duct 19, runs through the heat exchanger 17 at a temperature on average lower than the temperature of about 10-15 °C of the stratum water 11, acquiring heat from the water-bearing stratum 10.

The stratum water 11, on the other hand, is sucked up by means of the pumping device 22 and is forced to enter the first compartment 15 through the top opening 20 and forced to run through the heat exchanger 17 downwards.

The exchange of heat between the operating fluid 8 and the stratum water 11 occurs very efficiently by convection effect, both due to the whirling movement produced by the pumping device 22 and to the fact that, conveniently, the operating fluid 8 is made to circulate in the heat exchanger 17 in counter current with respect to the flow of the stratum water 11.

Once the heat exchange has been completed, the stratum water 11 crosses the pumping device 22, passes into the second compartment 16 and exits in the water-bearing stratum through the bottom opening 21.

In condition of normal operation of the geothermal probe 1, the flow rate of the stratum water 11 at inlet is the same as the flow rate of the stratum water 11 at outlet; the level of the water-bearing stratum 10 thus remains constant and no stratum pumping phenomena occur.

Once the heat exchange has been completed, the stratum water 11 evacuated from the geothermal probe 1 has a temperature a few degrees below that at inlet (maximum 4 °C); by virtue of this temperature difference and of the distance between the two access openings 20, 21, the stratum water 11 running through the tubular element 9 tends to move downwards also due to a natural effect, making the operation of the pumping device 22 easier and, after returning to the water-bearing stratum 10, tends not to return upwards, avoiding any short-circuit backflows which would stress the water-bearing stratum 10 around the geothermal probe 1 and reduce the efficiency of the system.

In summer, the operation of the geothermal probe 1 is reversed with respect to that shown in figure 2.

In this season, the heat pump 4 is operated to cool the building 3 and the operating fluid 8 has the task of taking heat from the heat pump 4 and transferring it to the water-bearing stratum 10.

Inside the heat exchanger 17, in fact, the operating fluid 8 has a higher temperature on average than that of the stratum water 11 and therefore cools down while the stratum water 11 heats up.

In these operating conditions, the pumping device 22 is operated in a reverse direction to winter and the stratum water 11 is sucked up through the bottom opening 21 and conveyed upwards, also exploiting natural convective phenomena, until it comes out of the top opening 20.

In the same way, the operating fluid 8 runs through the heat exchanger 17 in an opposite direction (in this circumstance, the incoming duct 18 and the delivery duct 19 are reversed with respect to winter operation), so as to ensure in any case a counter-current flow between the two heat transfer fluids.

In this season as well, therefore, the difference in temperature is exploited of the stratum water 11 between the bottom opening 21 (at lower temperature) and the top opening 20 (at higher temperature) to make the operation of the pumping device 22 easier and prevent any short-circuit backflows.

It has in practice been ascertained how the described invention achieves the proposed objects.

In this respect, it must be underlined that the geothermal probe according to the invention allows:
- finding a valid alternative to the use of traditional probes which contemplate drilling up to 100-150 m and very high manufacturing and installation costs, by exploiting on the contrary a low-enthalpy and low-depth probe which only requires reaching the first available water-bearing stratum and reduces the risk of placing in communication, during drilling, two or more superimposed water-bearing stratums and, therefore, damaging these;
- exploiting the transfer of heat between the operating fluid and the water-bearing stratum by means of particularly efficient forced convective effects, able to increase the stratum flow so as to increase the exchange between the heat exchanger walls and the stratum water;
- using an operating fluid composed only of drinking water, unlike traditional probes which use glycol;
- performing maintenance and repair jobs without abandoning or jeopardising the integrity of the geothermal well;
- extending the thermal capacity of the system without having to perform any other drilling operations;
- also making available a winter and summer conditioning system to small or modest property units, with sustainable costs compared to very costly existing technologies.

## Claims

1. Closed-loop geothermal probe (1), comprising at least a tubular element (9) which can be buried in a water-bearing stratum (10) containing stratum water (11), inside said tubular element (9) being delimited a housing space (14, 15) for housing at least a heat exchanger (17) in which flows an operating fluid (8) suitable for exchanging heat with said stratum water (11), said tubular element (9) comprising at least a first access opening (20) and at least a second access opening (21) for the flow of said stratum water (11) between said water-bearing stratum (10) and said tubular element (9), inside said tubular element (9) being housed at least a pumping device (22) for pumping said stratum water (11) suitable for returning said stratum water (11) in inlet from one of said access openings (20, 21) and for pumping it in exit through the other of said access openings (20, 21), at least one between said first access opening (20) and said second access opening (21) being associated with filtering means, **characterized by** the fact that it comprises at least a utility pipe (25) suitable for cleaning said filtering means.

2. Geothermal probe (1) according to the claim 1, **characterized by** the fact that said access openings (20, 21) are substantially spaced out along the longitudinal direction of said tubular element (9), said housing space (14, 15) being defined by the space comprised between said access openings (20, 21).

3. Geothermal probe (1) according to one or more of the preceding claims, **characterized by** the fact that said housing space (15, 16) is split into at least a first compartment (15) communicating with said first access opening (20) and into at least a second compartment (16) communicating with said second access opening (21), said compartments (15, 16) being separated the one from the other and placed in fluidic communication by interposition of said pumping device (22).

4. Geothermal probe (1) according to the claim 3, **characterized by** the fact that at least one between said heat exchanger (17) and said pumping device (22) is housed in said first compartment (15).

5. Geothermal probe (1) according to one or more of the preceding claims, **characterized by** the fact that said tubular element (9) is substantially vertical, said first access opening (20) being substantially at the top and said second access opening (21) being substantially at the bottom.

6. Geothermal probe (1) according to one or more of the preceding claims, **characterized by** the fact that said heat exchanger (17) is associated with at least an incoming duct (18) of the operating fluid (8) to be heated/cooled and with at least a delivery duct (19) of the heated/cooled operating fluid (8).

7. Geothermal probe (1) according to one or more of the preceding claims, **characterized by** the fact that it comprises at least a utility well (13) mounted at the ground from which an upper extremity (9a) of said tubular element (9) appears on surface.

8. Geothermal probe (1) according to claim 6 and 7, **characterized by** the fact that said ducts (18, 19) are housed at least partially inside said tubular element (9) and exit through said upper extremity (9a).

9. Geothermal probe (1) according to one or more of the preceding claims, **characterized by** the fact that it comprises closing means (14) of said upper extremity (9a).

10. Geothermal probe (1) according to the claim 9, **characterized by** the fact that said closing means (14) comprise at least a water-tight partition wall.

11. Geothermal probe (1) according to one or more of the preceding claims, **characterized by** the fact that it comprises at least a processing and control unit (26) of the operation of said pumping device (22).

12. Geothermal probe (1) according to the claim 11, **characterized by** the fact that it comprises first detection means (27), which are suitable for detecting the pressure of said stratum water (11) exiting from said pumping device (22) and are operatively associated with said processing and control unit (26).

13. Geothermal probe (1) according to the claim 11 or 12, **characterized by** the fact that it comprises second detection means (28), which are suitable for detecting the temperature of said stratum water (11) exiting from said heat exchanger (17) and are associated with said processing and control unit (26).

14. Geothermal probe (1) according to the claim 11 or 12 or 13 but at least with claim 11, **characterized by** the fact that it comprises third detection means (29), which are suitable for detecting the temperature of said operating fluid (8) exiting from said tubular element (9) and are operatively associated with said processing and control unit (26).

## Patentansprüche

1. Geothermische Sonde (1) mit geschlossenem Kreislauf, umfassend zumindest ein rohrförmiges Element (9), das in eine wasserführende Schicht (10) enthaltend Schichtenwasser (11) eingetaucht werden kann, wobei in dem rohrförmigen Element (9) ein Gehäuseraum (14, 15) zur Aufnahme zumindest eines Wärmetauschers (17) begrenzt ist, wobei durch den Wärmetauscher (17) ein Betriebsfluid (8) strömt, das zum Austauschen von Wärme mit dem Schichtenwasser (11) dient, wobei das rohrförmige Element (9) zumindest eine erste Zugangsöffnung (20) sowie zumindest eine zweite Zugangsöffnung (21) für den Schichtenwasserstrom (11) zwischen der wasserführenden Schicht (10) und dem rohrförmigen Element (9) aufweist, wobei in dem rohrförmigen Element (9) zumindest eine Pumpvorrichtung (22) zum Pumpen des Schichtenwassers (11) angeordnet ist, die in der Lage ist, das Schichtenwasser (11) eingangsseitig von einer der Zugangsöffnungen (20, 21) zurückzuführen und dieses ausgangsseitig durch die andere der Zugangsöffnungen (20, 21) zu pumpen, wobei zumindest eine der ersten Zugangsöffnung (20) und der zweiten Zugangsöffnung (21) mit einer Filtereinrichtung verbunden ist, **gekennzeichnet durch** die Tatsache, dass sie zumindest ein Versorgungsrohr (25) zur Reinigung der Filtereinrichtung umfasst.

2. Geothermische Sonde (1) gemäß Anspruch 1, **gekennzeichnet durch** die Tatsache, dass die Zugangsöffnungen (20, 21) im Wesentlichen verteilt entlang der Längsrichtung des rohrförmigen Elements (9) angeordnet sind, wobei der Gehäuseraum (14, 15) **durch** den zwischen den Zugangsöffnungen (20, 21) eingefassten Raum definiert ist.

3. Geothermische Sonde (1) gemäß einem oder mehreren der vorangehenden Ansprüche, **gekennzeichnet durch** die Tatsache, dass der Gehäuseraum (15, 16) aufgeteilt ist in zumindest eine erste Kammer (15), die mit der ersten Zugangsöffnung (20) in Verbindung steht, sowie zumindest eine zweite Kammer (16), die mit der zweiten Zugangsöffnung (21) in Verbindung steht, wobei die Kammern (15, 16) voneinander getrennt sind und **durch** Zwischenschaltung der Pumpvorrichtung (22) miteinander in Fluidverbindung stehen.

4. Geothermische Sonde (1) gemäß Anspruch 3, **gekennzeichnet durch** die Tatsache, dass der Wärmetauscher (17) und/oder die Pumpvorrichtung (22) in der ersten Kammer (15) untergebracht sind.

5. Geothermische Sonde (1) gemäß einem oder mehreren der vorangehenden Ansprüche, **gekennzeichnet durch** die Tatsache, dass das rohrförmige Element (9) im Wesentlichen vertikal ist, wobei die erste Zugangsöffnung (20) im Wesentlichen oben und die zweite Zugangsöffnung (21) im Wesentlichen unten angeordnet ist.

6. Geothermische Sonde (1) gemäß einem oder mehreren der vorangehenden Ansprüche, **gekennzeichnet durch** die Tatsache, dass der Wärmetauscher (17) mit zumindest einer Zuführleitung (18) des zu erwärmenden/zu kühlenden Betriebsfluids (8) und mit zumindest einer Abführleitung (19) des erwärmten/gekühlten Betriebsfluids (8) in Verbindung steht.

7. Geothermische Sonde (1) gemäß einem oder mehreren der vorangehenden Ansprüche, **gekennzeichnet durch** die Tatsache, dass sie zumindest eine am Boden angebrachte Versorgungsquelle (13) umfasst, von welcher aus ein oberes Ende (9a) des rohrförmigen Elements (9) an der Oberfläche erscheint.

8. Geothermische Sonde (1) gemäß Anspruch 6 oder 7, **gekennzeichnet durch** die Tatsache, dass die Leitungen (18, 19) zumindest teilweise innerhalb des rohrförmigen Elements (9) aufgenommen sind und **durch** das obere Ende (9a) austreten.

9. Geothermische Sonde (1) gemäß einem oder mehreren der vorangehenden Ansprüche, **gekennzeichnet durch** die Tatsache, dass sie Verschlussmittel (14) für das obere Ende (9a) umfasst.

10. Geothermische Sonde (1) gemäß Anspruch 9, **gekennzeichnet durch** die Tatsache, dass die Verschlussmittel (14) zumindest eine wasserdichte Trennwand umfassen.

11. Geothermische Sonde (1) gemäß einem oder mehreren der vorangehenden Ansprüche, **gekennzeichnet durch** die Tatsache, dass sie zumindest eine Verarbeitungs- und Steuereinheit (26) für den Betrieb der Pumpvorrichtung (22) umfasst.

12. Geothermische Sonde (1) gemäß Anspruch 11, **gekennzeichnet durch** die Tatsache, dass sie erste Erfassungsmittel (27) umfasst, die den Druck des aus der Pumpvorrichtung (22) austretenden Schichtenwassers (11) erfassen können und mit der Verarbeitungs- und Steuereinheit (26) in Wirkverbindung stehen.

13. Geothermische Sonde (1) gemäß Anspruch 11 oder 12, **gekennzeichnet durch** die Tatsache, dass sie zweite Erfassungsmittel (28) umfasst, die die Temperatur des aus dem Wärmetauscher (17) austretenden Schichtenwassers (11) erfassen können und mit der Verarbeitungs- und Steuereinheit (26) in Verbindung stehen.

14. Geothermische Sonde (1) gemäß Anspruch 11 oder 12 oder 13, aber zumindest mit Anspruch 11, **gekennzeichnet durch** die Tatsache, dass sie dritte Erfassungsmittel (29) umfasst, die die Temperatur des aus dem rohrförmigen Element (9) austretenden Betriebsfluids (8) erfassen können und in Wirkverbindung mit der Verarbeitungs- und Steuereinheit (26) stehen.

## Revendications

1. Sonde géothermique à boucle fermée (1), comprenant au moins un élément tubulaire (9) qui peut être enfoui dans une strate aquifère (10) contenant de l'eau de strate (11), un espace de logement (14, 15) étant délimité à l'intérieur dudit élément tubulaire (9) pour loger au moins un échangeur de chaleur (17) dans lequel circule un fluide de fonctionnement (8) apte à échanger de la chaleur avec ladite eau de strate (11), ledit élément tubulaire (9) comprenant au moins une première ouverture d'accès (20) et au moins une deuxième ouverture d'accès (21) pour la circulation de ladite eau de strate (11) entre ladite strate aquifère (10) et ledit élément tubulaire (9), au moins un dispositif de pompage (22) étant logé à l'intérieur dudit élément tubulaire (9) pour pomper ladite eau de strate (11) et apte à renvoyer ladite eau de strate (11) en entrée à partir de l'une desdites ouvertures d'accès (20, 21) et à pomper celle-ci en sortie à travers l'autre desdites ouvertures d'accès (20, 21), au moins l'une parmi ladite première ouverture d'accès (20) et ladite deuxième ouverture d'accès (21) étant associée à des moyens de filtration, **caractérisée par le fait qu'**elle comprend au moins un tuyau de service (25) apte à nettoyer lesdits moyens de filtration.

2. Sonde géothermique (1) selon la revendication 1, **caractérisée par le fait que** lesdites ouvertures d'accès (20, 21) sont sensiblement échelonnées le long de la direction longitudinale dudit élément tubulaire (9), ledit espace de logement (14, 15) étant défini par l'espace compris entre lesdites ouvertures d'accès (20, 21).

3. Sonde géothermique (1) selon une ou plusieurs des revendications précédentes, **caractérisée par le fait que** ledit espace de logement (15, 16) est divisé en au moins un premier compartiment (15) communiquant avec ladite première ouverture d'accès (20) et en au moins un deuxième compartiment (16) communiquant avec ladite deuxième ouverture d'accès (21), lesdits compartiments (15, 16) étant séparés l'un de l'autre et placés en communication fluidique par interposition dudit dispositif de pompage (22).

4. Sonde géothermique (1) selon la revendication 3, **caractérisée par le fait qu'**au moins l'un parmi ledit échangeur de chaleur (17) et ledit dispositif de pompage (22) est logé dans ledit premier compartiment (15).

5. Sonde géothermique (1) selon une ou plusieurs des revendications précédentes, **caractérisée par le fait que** ledit élément tubulaire (9) est sensiblement vertical, ladite première ouverture d'accès (20) étant sensiblement à sa partie supérieure et ladite deuxième ouverture d'accès (20) étant sensiblement au fond.

6. Sonde géothermique (1) selon une ou plusieurs des revendications précédentes, **caractérisée par le fait que** ledit échangeur de chaleur (17) est associé à au moins un conduit d'admission (18) du fluide de fonctionnement (8) devant être chauffé/refroidi et à au moins un conduit de refoulement (19) du fluide de fonctionnement (8) chauffé/refroidi.

7. Sonde géothermique (1) selon une ou plusieurs des revendications précédentes, **caractérisée par le fait qu'**elle comprend au moins un puits de service (13) ménagé au niveau du sol, à partir duquel une extrémité supérieure (9a) dudit élément tubulaire (9) apparaît en surface.

8. Sonde géothermique (1) selon les revendications 6 et 7, **caractérisée par le fait que** lesdits conduits (18, 19) sont logés au moins partiellement à l'intérieur dudit élément tubulaire (9) et sortent en traversant ladite extrémité supérieure (9a).

9. Sonde géothermique (1) selon une ou plusieurs des revendications précédentes, **caractérisée par le fait qu'**elle comprend des moyens de fermeture (14) de ladite extrémité supérieure (9a).

10. Sonde géothermique (1) selon la revendication 9, **caractérisée par le fait que** lesdits moyens de fermeture (14) comprennent au moins une cloison de séparation étanche à l'eau.

11. Sonde géothermique (1) selon une ou plusieurs des revendications précédentes, **caractérisée par le fait qu'**elle comprend au moins une unité de traitement et de commande (26) du fonctionnement dudit dispositif de pompage (22).

12. Sonde géothermique (1) selon la revendication 11, **caractérisée par le fait qu'**elle comprend des premiers moyens de détection (27), qui sont aptes à détecter la pression de ladite eau de strate (11) sortant dudit dispositif de pompage (22) et qui sont associés de manière fonctionnelle à ladite unité de traitement et de commande (26).

13. Sonde géothermique (1) selon la revendication 11 ou 12, **caractérisée par le fait qu'**elle comprend des deuxièmes moyens de détection (28), qui sont aptes à détecter la température de ladite eau de strate (11) sortant dudit échangeur de chaleur (17) et qui sont associés à ladite unité de traitement et de commande (26).

14. Sonde géothermique (1) selon la revendication 11 ou 12 ou 13 mais au moins avec la revendication 11, **caractérisée par le fait qu'**elle comprend des troisièmes moyens de détection (29), qui sont aptes à détecter la température dudit fluide de fonctionnement (8) sortant dudit élément tubulaire (9) et qui sont associés de manière fonctionnelle à ladite unité de traitement et de commande (26).
